# EUROPEAN PATENT SPECIFICATION

(11) **EP 3 717 223 B1**
(45) Date of publication and mention of the grant of the patent: **05.01.2022**
(21) Application number: 18825783.6
(22) Date of filing: 27.11.2018
(51) Int. Cl.: B29D 30/24, B29D 30/36

(54) **DRUM FOR THE APPLICATION OF SEMI-FINISHED PRODUCTS WITHIN TYRES, AND PROCESS FOR THE APPLICATION OF SEMI-FINISHED PRODUCTS WITHIN TYRES**
TROMMEL ZUM AUFBRINGEN VON HALBZEUGEN IN REIFEN UND VERFAHREN ZUM AUFBRINGEN VON HALBZEUGEN IN REIFEN
TAMBOUR POUR L'APPLICATION DE PRODUITS SEMI-FINIS DANS DES PNEUMATIQUES ET PROCÉDÉ POUR L'APPLICATION DE PRODUITS SEMI-FINIS DANS DES PNEUMATIQUES

(30) Priority: 30.11.2017 IT 201700138049
(43) Date of publication of application: 07.10.2020
(73) Proprietor: Pirelli Tyre S.p.A., 20126 Milano (IT)
(72) Inventor: DE COL, Christian, 20126 Milano (IT); CONTI, Davide Lupo, 20126 Milano (IT); BOFFA, Vincenzo, 20126 Milano (IT)
(74) Representative: Tansini, Elio Fabrizio
(86) International application number: PCT/IB2018/059330
(87) International publication number: WO 2019/106523

(56) References cited:
- EP-A1- 1 864 787
- US-A- 3 536 566
- US-A- 3 607 558
- US-A- 4 673 457
- US-A1- 2007 095 481

## Description

The present invention relates to a drum for the application of semi-finished products within tyres for vehicle wheels. The invention also relates to a process for the application of semi-finished products within tyres for vehicle wheels, which can be implemented by means of said drum.

In particular, in an embodiment described herein, the invention lends itself to being used in the production of self-sealing tyres, to perform the application of a self-sealing sleeve within a tyre being processed. The invention can, however, also be implemented for the application of other types of semi-finished products, for example liners, under-liners, sensors and/or supporting elements thereof.

Self-sealing tyres are puncture-resistant tyres because they contain a self-sealing layer applied to the radially inner surface of the tyre, which automatically seals any holes produced by the accidental penetration of nails, screws or other sharp bodies through the tyre.

The production cycles of a tyre involve producing and/or assembling the various components of a tyre, thus obtaining a green tyre and subsequently subjecting the green tyre to a moulding and vulcanisation process adapted to define the structure of the tyre according to a desired geometry and tread pattern.

The term "semi-finished" means a component of the tyre formed as an annular sleeve, for example cylindrical, by assembling one or more components that are the same or different from each other.

In a preferred embodiment, the semi-finished product is a self-sealing sleeve to be applied within a carcass structure. Alternatively, the semi-finished product may be represented, for example, by a liner or by a liner + under-liner assembly to be applied within a carcass ply, or by a carcass structure or other component to be applied within a crown structure.

The term "self-sealing sleeve" refers to an assembled semi-finished product having a substantially cylindrical shape designed to be the self-sealing layer within a tyre.

By "substantially cylindrical conformation" both of the self-sealing sleeve and of the support, in particular of the drum bearing it, is meant both a cylindrical conformation having a straight generatrix and a slightly convex conformation having a convex generatrix.

The terms "radial" and "axial" and the expressions "radially internal/external" and "axially internal/external" are used with reference to the radial/axial direction of the drum, a semi-finished product or the tyre (or a portion thereof) to which the semi-finished product is applied, i.e. a direction perpendicular/parallel to a geometric axis of the drum itself which, during application, substantially coincides with the rotation axis of the tyre and of the semi-finished product applied thereto.

The terms "circumferential" and "circumferentially" are used with reference to the annular development of the drum, a semi-finished product or the tyre (or a portion thereof).

"Equatorial plane" is meant to designate a plane perpendicular to the geometric axis of the tyre and equidistant from the axially outer portions of the tyre itself.

By "first/second annular portion" of the self-sealing sleeve or other semi-finished product it is meant a substantially annular portion having an axial length smaller than the axial length of the self-sealing sleeve. Each annular portion may be a continuous ring or a circumferential sequence of sectors corresponding, for example, to circumferential sectors of the drum supporting the self-sealing sleeve or other semi-finished product.

By "self-sealing material" it is meant a polymeric material provided, after the vulcanisation of the tyre, with viscoelastic and tackiness features such as to allow the material to flow inside a perforation caused by a sharp element and to adhere and be dragged by said moving sharp element. Such polymeric material may for example comprise a synthetic or natural elastomer, an elastomeric block copolymer, process oil, at least one tackifying agent, and at least one reinforcing filler.

By the generic term "tyre", when not further specified, it is meant both a green tyre being processed comprising at least one carcass structure having at least one toroidally shaped carcass ply having its axially opposed end flaps associated with respective bead cores and forming a pair of beads, and a green tyre, and a moulded and vulcanised tyre.

By "green tyre" it is meant a tyre at the end of the building process which is not yet subjected to a moulding and vulcanisation process.

By "vulcanised tyre" or "moulded and vulcanised tyre" it is meant a green tyre which has been subjected to a moulding and vulcanisation process.

US2007/095481-A1 relates to a belt drum, particularly for shaping a belt layer and/or a tread layer, comprising a plurality of support members having a rigid support surface for the tyre component and situated at the circumference of the drum. Each support member comprises a middle support section and side support sections movably connected thereto. The middle sections of the support members are moveable by first movement means between a first position, in which the respective support member forms a support surface that is parallel to the centre line, and at least one second position, in which a substantially convex support surface is formed by the respective support member. US3,607,558-A provides a radially expandable and contractable former which comprises a plurality of sets of circumferentially spaced rigid support segments. Each set comprises three rigid segments, i.e. a central segment and lateral segments. Axially spaced-apart pivots connect adjacent segments in each set together. Operating means including a pair of operating links secured to the central segment are provided to radially move the sets of segments between a radially outer position in which each set of segments has a horseshoe configuration and a radially inner position in which the segments of each set are arranged substantially in a straight line.

US4,673,457-A discloses an expandable tyre building drum comprising a central portion and side portions, which are formed from arrays of segments. Expansion of the former is controlled by a pair of wedge members, which are movable axially and engage corresponding tapered surfaces, formed on a set of radially extending plates secured one to each of the central segments. When the central segments are moved radially outwardly, by the action of the wedge members, moving axially inwardly, the arrays of side segments, are forced to take up a frusto-conical shape.

US3,536,566-A discloses a tyre building drum having circumferentially arranged intermediate supporting sections each comprising a plurality of intermediate supporting members movable radially and circumferentially relative to each other, and a plurality of end supporting members at opposite ends of the intermediate assembly together with end head components at opposite ends of the drum movable axially toward and away from each other. Force transmitting means, provided between the end head components and the intermediate and end supporting members provide for forming the drum into substantially cylindrical supporting surfaces of varying diameter, and for imparting an annular or torus configuration to the drum. EP1864787-A1 addresses a process for making a self-supporting tyre, wherein sidewall inserts are formed on an expandable drum, the expandable drum being substantially cylindrical in a first configuration and substantially toric in a second configuration. The expandable drum comprises a flexible membrane of substantially cylindrical shape at rest and a device for inflating the membrane. The expandable drum further comprises pressing means placed inside the membrane comprising levers actuated by jacks.

Document US2009/0205765 describes a method for producing a self-sealing tyre wherein it is provided to arrange a vulcanised tyre and form a sealing band by extruding a self-sealing material on a laminar support. The sealing band is wound in a spiral to be introduced into the vulcanised tyre.

Document EP3009260 describes a self-sealing tyre comprising a sealing layer obtained by spiralling a sealing material directly onto the radially inner surface of the vulcanised tyre rotated about the axis thereof. In particular, the vulcanised tyre is mounted on a rotating actuation device while a nozzle mounted at the outlet of an extruder is inserted within the tyre. The sealing material is extruded from the extruder and deposited on the surface of the tyre through the nozzle.

Document WO2011/064698 relates to a method for selectively controlling the self-sealing capacity of a tyre obtained by affixing a sealing compound on a drum and subsequently forming a precursor of a green tyre thereon including liner and carcass, and subsequent shaping, moulding and vulcanisation.

The Applicant has ascertained that current production requirements require a sufficient level of flexibility at any stage of the process and that even limiting the application of a sealing layer or another semi-finished product to be arranged in a radially internal position to a post-vulcanisation step would limit the possibilities of adapting the building process and the layout of the building plant to the individual production requirements. The Applicant has therefore understood the importance of releasing as much as possible the step of application of the sealing layer from the specific building process to increase the flexibility of the building process and/or the building plant.

The Applicant has understood that by making a semi-finished product in a manner completely independent of the type of building process and plant of the tyre, it is possible to apply such a semi-finished product to any type of green tyre being processed, green or moulded and vulcanised, obtained by any building process carrying out a radial expansion of the sleeve within the tyre until it adheres internally to the tyre itself. However, the Applicant has observed that in a built tyre, the difference existing between the fitting diameter detectable at the beads and the internal diameter detectable near the equatorial plane may be an obstacle to an easy insertion of a semi-finished product in the form of a cylindrical sleeve and/or its subsequent application against the internal surface of the tyre itself at the crown portion. In fact, the beads lend themselves to interfere with the semi-finished product during its introduction into the tyre.

The Applicant has also noted that it is necessary to have a correct adhesion of the semi-finished product against the internal surfaces of the tyre which, in the shoulder areas, does not offer ample room for manoeuvring. This adhesion must in particular be such as to reduce the risk of permanence of air bubbles between the radially external surface of the semi-finished product and the radially internal surface of the tyre in order to avoid defects that could lead to the discard thereof.

Finally, the Applicant has verified that the aforementioned problem becomes even more relevant in the current high flexibility production requirements, where the measurements of the tyres produced and therefore their radially internal profiles have a high differentiation, multiple batches of production in the same production shift being possible.

The Applicant therefore perceived that the construction of an expandable shrinkable drum allowed overcoming the problems of operational flexibility and overall dimensions illustrated above, but the same implementation had to be conceived as a function of the problems of integrity and acceptance of the finished product.

Finally, the Applicant has found that the application of a semi-finished product in the form of a cylindrical sleeve within a tyre, whether green being processed or green, or already moulded and vulcanised, which responds positively to the problems described above, can be achieved by using a drum provided with first and second portions radially expandable in succession, so as to impose a radial expansion on the semi-finished product by at least two successive movements.

More precisely, according to a first aspect, the invention relates to a drum for the application of semi-finished products within tyres for vehicle wheels, according to claim 1. In a second aspect, the invention relates to a process for the application of a semi-finished product within a tyre, according to claim 13.

The Applicant believes that the use of a drum with expandable sectors allows imposing, where required, a suitable radial expansion to the semi-finished product, thus simplifying the application thereof even within green tyres being processed or green tyres already processed. The drum with the first and second radially contracted portions is in fact suitable to keep the semi-finished product according to a diameter smaller than the minimum diameter of the tyre in the vicinity of the beads. The drum together with the semi-finished product can therefore be easily inserted into the tyre axially, without the risk of damaging the latter and/or the semi-finished product due to sliding or mechanical interference.

The Applicant further believes that actuating the radial expansion by at least two distinct movements, thus bringing the semi-finished product against the inside of the tyre initially at a first axial contact area, to gradually extend the adhesion to an axially external position promotes a homogeneous and correct application of the semi-finished product on the internal surface of the tyre, which makes the formation of air bubbles between the semi-finished product and the tyre unlikely.

In at least one of the foregoing aspects, the present invention may have at least one of the preferred features that follow.

The Applicant considers that a symmetrical arrangement of the second portions with respect to the first portions facilitates a homogeneous distribution of stresses and deformations on the semi-finished product and on the tyre during application, to the advantage of the geometric uniformity and regularity of the final product.

Preferably, each of the second portions is rotatably constrained to a respective axial end edge of the first portion.

Preferably, each of the second portions is movable with respect to the first portion between a pointing condition in which it is obliquely oriented towards the geometric axis of the drum and an application condition in which it is extended axially over the continuation of the first portion.

Preferably, in the pointing condition and in the application condition, an axially external end edge of each second portion is respectively approached to and away from the geometric axis of the drum.

Preferably, in the pointing condition, each of the second portions has its own axially external end edge spaced from said geometric axis according to a measure smaller than a distance between the geometric axis and the axially internal end edge of the same second portion.

Preferably, the driving devices comprise, for each sector, a pusher slidably guided in radial direction with respect to the central core.

Preferably, the pusher is movable along at least one guide rod extending radially from the central core.

Preferably, moreover, alignment abutments are provided, carried by the central core and acting against said second portions when the first portions of the sectors are in the contracted position. Preferably, said alignment abutments are formed on radially external ends of said guide rods.

Preferably, when the first portions are in contracted position, the alignment abutments maintain the second portions in axial alignment relation with the respective first portions.

Preferably, the second portions may be engaged in bearing relationship against the respective alignment abutments. Preferably, the second portions are disengageable from the respective alignment abutments in consequence of the movement of the first portions towards the expanded position. Preferably, the first portions of the sectors are radially movable each with respect to the respective pusher.

Preferably, said first portions have stems projecting radially towards the geometric axis of the drum and slidingly crossing the pushers.

Each of the first portions is therefore slidingly guided in a radial direction with respect to the geometric axis of the drum. Preferably, elastic elements are further provided, operating between the pushers and the first portions of the sectors for pushing the latter in radial movement away from the pushers. Preferably, retention devices are further provided for preventing radial movement of the first portions with respect to the pushers, opposing centripetal thrusts radially transmitted to the first portions.

Preferably, said retention devices are configured for selectively enabling the radial movement of the first portions with respect to the pushers, when the centripetal radial thrusts exceed a predetermined value.

Preferably, said driven driving members comprise pressure elements operating against the second portions in radially internal position with respect thereto.

Preferably, said pressure elements comprise respective thrust arms, each extending between one of said pushers and the respective second portion.

Preferably, each of said thrust arms comprises a first end rotatably constrained to the respective pusher, and a second end acting against the respective second portion.

Preferably, each of the pressing elements comprises at least one sliding roller carried by the thrust arm and acting against the respective second portion.

A smooth and sliding movement of the sectors is therefore favoured, without excessive stress among the mechanical members.

Preferably, the second circumferential zones are located along respective axially external edges of the semi-finished product.

Preferably, during the execution of the first movement the second portions are brought from an application condition in which they axially extend on the continuation of the first portions, to a pointing condition in which they are obliquely oriented towards the geometric axis of the drum.

Preferably, the expansion of the second portions of the sectors is actuated with a movement of rotation of each second portion around a respective axial end edge of the respective first portion. Preferably, during the second movement, the contact of the semi-finished product against the radially internal surface is progressively actuated starting from the first circumferential zone towards said at least one second circumferential zone. Further features and advantages of the invention will become clear from the following description of a drum for the application of semi-finished products within tyres for vehicle wheels and an application process that can be implemented by said drum. Such a description is shown below by way of a non-limiting example with reference to the accompanying figures, in which:
figure 1 shows a diametric section of a drum according to the present invention, carrying a semi-finished product in the form of a cylindrical sleeve ready to be inserted within a tyre;
figure 2 shows the drum supporting the semi-finished product inserted within the tyre;
figure 3 shows an enlarged and sectional detail according to the trace III-III in figure 2;
figure 4 shows the drum-semi-finished-product-tyre assembly at the end of the execution of a first movement for applying the semi-finished product within the tyre;
figure 5 shows the drum-semi-finished-product-tyre assembly at the end of the application of the semi-finished product within the tyre;

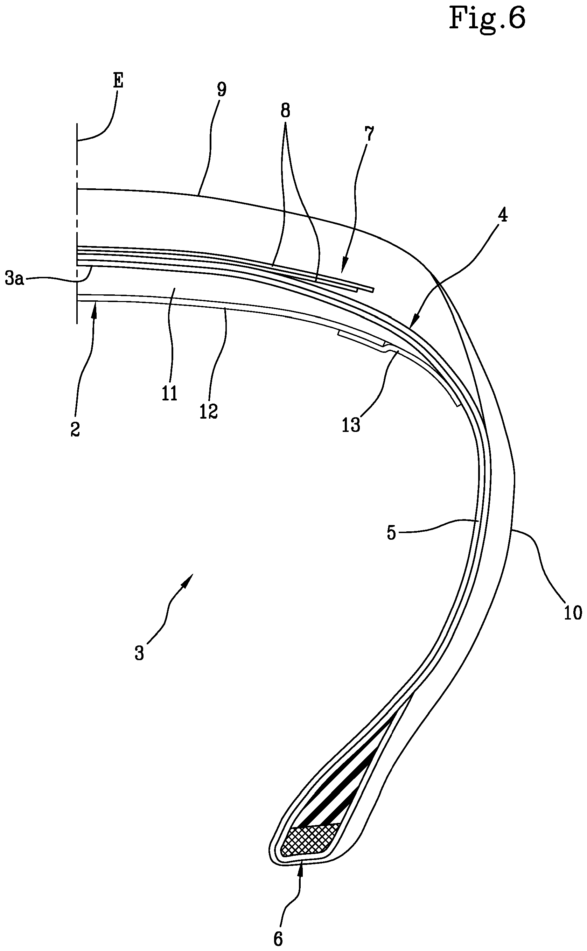

figure 6 shows a transverse half-section of a tyre provided with a semi-finished product which can be applied by means of the subject drum.

With reference to the aforementioned figures, reference numeral 1 indicates as a whole a drum for the application of semi-finished products within tyres for vehicle wheels, according to the present invention.

The drum 1 is adapted to be used to apply at least one semi-finished product 2 within a green tyre 3 being processed, green or moulded and vulcanised. In the example described, the tire 3 is a green tyre which has already completed the building cycle, and has a carcass structure 4 comprising at least one carcass ply 5 having end flaps engaged, for example by turning up, around respective anchoring portions 6 in the areas usually identified as "beads". The carcass structure 4 is associated, in a radially external position, to a crown structure 7 comprising one or more belt layers 8 and a tread band 9 which defines a radially external surface of the tyre. A pair of sidewalls 10 each extend from an axially external edge of the tread band 9 up to the vicinity of the respective anchoring portion 6, to externally cover the axially opposite sides of the carcass structure 4.

As said above, the tyre 3 may also be moulded and vulcanised before receiving the semi-finished product 2.

The semi-finished product 2 is preferably made in the form of a cylindrical sleeve. The semi-finished product 2 may comprise a layer of self-sealing material 11 possibly arranged on a protective film 12, for example made of thermoplastic material such as polyamide or polyester.

The axially opposite circumferential edges of the protective film 12 may be engaged with annular sealing inserts 13, for example in the form of strips of elastomeric material, having a function of containment of the self-sealing material 11 between the protective film 12 and a radially internal surface 3a of the tyre 3. The drum 1 comprises a central core 14 defining a geometric axis X of the drum 1 itself.

The central core 14 preferably comprises a tubular shaft 15 longitudinally crossed by a control screw 16 having a pair of threads 16a, 16b, respectively right-handed and left-handed, axially symmetrical to each other.

Each of the threads 16a, 16b engages a respective nut 17 which, through one or more longitudinal slots 18a formed in the tubular shaft 15, is made integral with a respective slider 18 movable along the tubular shaft itself.

The control screw 16 is rotatably housed in the tubular shaft 15, so that at rotations of the screw correspond to axial translations of the sliders 18, in reciprocal approach and distancing.

The drum 1 further comprises a plurality of sectors 19 circumferentially distributed around its own geometric axis X.

Each sector 19 comprises a first portion 20 radially movable with respect to the central core 14 and at least one second portion 21 extending axially away from an axial end edge 20a of the first portion 20.

In a preferred embodiment, two of said second portions 21 are provided for each sector 19, symmetrically positioned in opposite and axially external positions with respect to the first portion 20. Preferably, the second portion 21 is rotatably connected to an axial end edge 20a of the respective first portion 20. For example, at least one constraint pin 22 may be provided which connects the axial end edge 20a of the first portion 20 to an axially internal end edge 21a of the second portion 21.

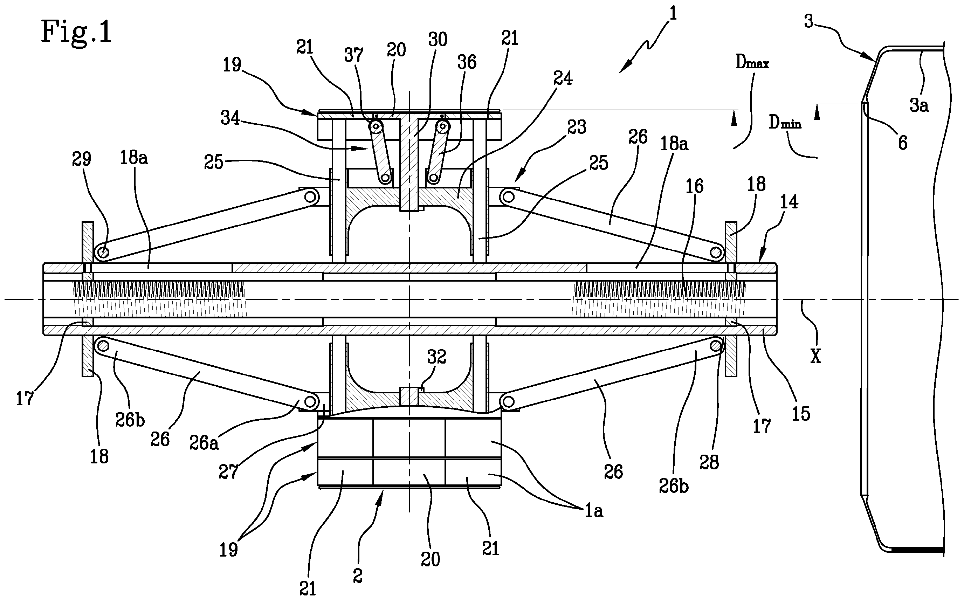

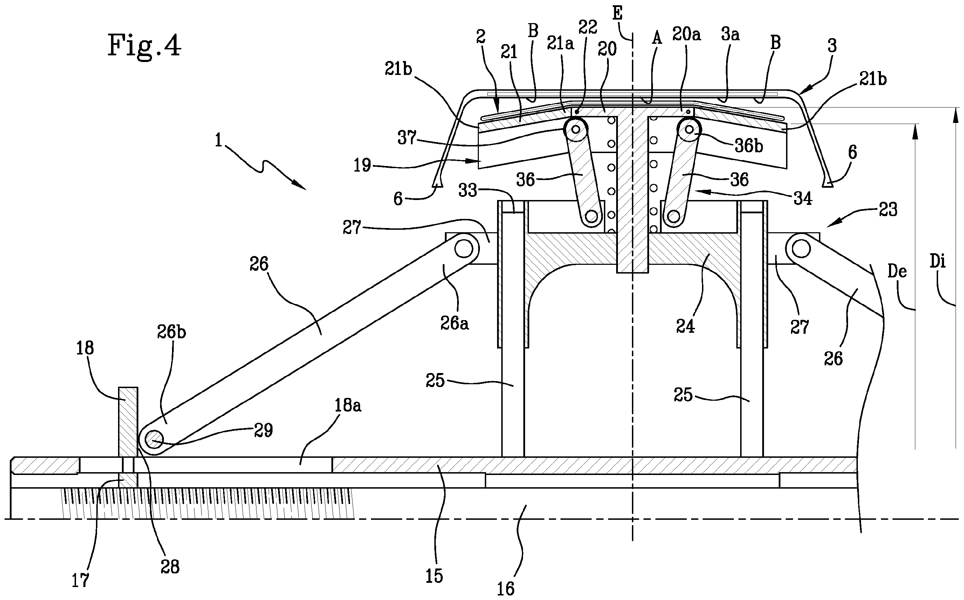

Each of the second portions 21 is therefore movable radially with respect to the first portion 20. More particularly, each second portion 21 is movable between a pointing condition exemplified in figure 4, and an application condition exemplified in figures 1, 2 and 5.

In the pointing condition, the second portion 21 is obliquely oriented towards the geometric axis X of the drum 1. In this condition, an axially external end edge 21b of the second portion 21 is close to the geometric axis X of the drum 1, i.e. spaced therefrom according to a measure "De" smaller than a distance "Di" between the geometric axis X and the axially internal end edge 21a of the same second portion 21.

In the application condition, the second portion 21 extends axially on the continuation of the first portion 20. In the illustrated example, the radially external surfaces of the first and second portions 21 in the application condition extend in mutual alignment parallel to the geometric axis X. In a possible embodiment variant, said radially external surfaces may extend according to an arched profile, for example defining a convexity facing away from the geometric axis X. In both cases, in the condition of application the difference between the measure "De" and the measure "Di" is substantially null or in any case smaller than that detectable in the pointing condition. In other words, in the application condition the radially external surfaces of the second portions 21 are substantially parallel with respect to the geometric axis X, or possibly form a smaller angle with respect to the one formed in the pointing condition.

Primary driving devices 23 operate between the central core 14 and the first portion 20 of each sector 19 to cause a radial translation of the first portions 20 with respect to the central core 14. More particularly, the primary driving devices 23 are configured to translate the first portions 20 away from the central core 14 from a contracted position towards an expanded position, and vice versa.

The primary driving devices 23 comprise, for each of the sectors 19, a pusher 24 slidably guided in radial direction with respect to the central core 14. The pusher 24, for example having a substantially plate-like body arranged according to a radial plane with respect to the geometric axis X of the drum 1, is movable along at least one guide rod 25, extending radially from the central core 14. In the illustrated example, a pair of guide rods 25 is provided for each pusher 24, integral with the tubular shaft 15 of the central core 14 and slidably crossing the respective pusher 24.

For each pusher 24, a pair of operating levers 26 is also provided, operatively connected each with one of the sliders 18 and the respective pusher 24. In the illustrated example, each actuation lever 26 has a first end 26a constrained to one or more attachment brackets 27 brought in axially external position by the respective pusher 24, and a second end 26b, preferably with a rounded profile, housed in a bearing relationship at a recess 28 defined in the respective slider 18 and in the tubular shaft 15. To retain the second ends 26b of the operating levers 26 in the recesses 28, a pair of annular connecting elements 29 may be provided, each one arranged around the central core 14 and engaged through the second ends.

Preferably, the first portions 20 of the sectors 19 are radially movable each with respect to the respective pusher 24. For example, each pusher 24 can be slidably crossed by at least one stem 30 radially projecting from the first portion 20, towards the geometric axis X of the drum 1. Each of the first portions 20 is therefore slidingly guided in a radial direction with respect to the geometric axis X of the drum 1.

Elastic elements 31 operate between the pushers 24 and the first portions 20 of the sectors 19 for pushing the latter in radial movement away from the pushers 24. In the illustrated example, the elastic elements 31 comprise a compression spring arranged around the respective stem 30 for each of the sectors 19.

The sectors 19 of the drum 1 may also be provided with retention devices 32 configured for preventing radial movement of the first portions 20 with respect to the pushers 24, opposing centripetal thrusts radially transmitted to the first portions 20. More in particular, the retention devices 32 are preferably configured for selectively enabling the radial movement of the first portions 20 with respect to the pushers 24, when the centripetal radial thrusts exceed a predetermined value.

In the illustrated example, such retention devices 32 comprise a pawl 32a or other stopping element, oscillatingly engaged with respect to the pusher 24 and elastically pushed towards the stem 30, for example by means of a contrast spring 32b. The pawl 32a, made for example in the form of a sphere, is adapted to engage an engagement seat 30a arranged along the stem 30 to retain the first portion 20 of the sector 19 in the expanded position. The pawl 32a can be disengaged from the engagement seat 30a when the first portion 20 of the sector 19 is subjected to a centripetal radial thrust higher than a predetermined value, which may optionally be modulated by adjusting the load of the contrast spring 32b.

In a possible embodiment variant, the function of the retention devices 32 may be entrusted with an adequate preload conferred to the compression springs 31.

Alignment abutments 33, configured to act against the second portions 21 of the sectors 19 when the first portions 20 of the sectors 19 are in the contracted position, may be associated with the central core 14. In the illustrated example, the alignment abutments 33 are arranged at the radially external ends of the guide rods 25.

The alignment abutments 33 are adapted to position the second portions 21 in the application condition when the first portions 20 are in contracted condition.

Following the movement of the first portions 20 towards the expanded position, the second portions 21 separate from the respective alignment abutments 33.

Preferably, the movement of the second portions 21 of the sectors 19 is controlled by driven driving members 34, operatively connected between the primary driving members 23 and the second portions themselves. More particularly, the driven driving members 34 are configured for moving the second portions 21 away from the central core 14 after the attainment of the expanded position of the first portions 20 of the sectors 19.

Preferably, the driven driving members 34 comprise pressure elements 35 operating in a radially internal position against the second portions 21.

The pressure elements 35 preferably comprise respective thrust arms 36, each extending between one of the pushers 24 and the respective second portion 21. More particularly, each thrust arm 36 has a first end 36a rotatably connected to the respective pusher 24, and a second end 36b acting against the respective second portion 21, preferably at an axially external point with respect to the same first end 36a. At least one sliding roller 37 may be rotatably engaged at the second end 36b of the thrust arm 36. The action of the thrust arm 36 against the second portion 21 is therefore exerted by the sliding roller 37.

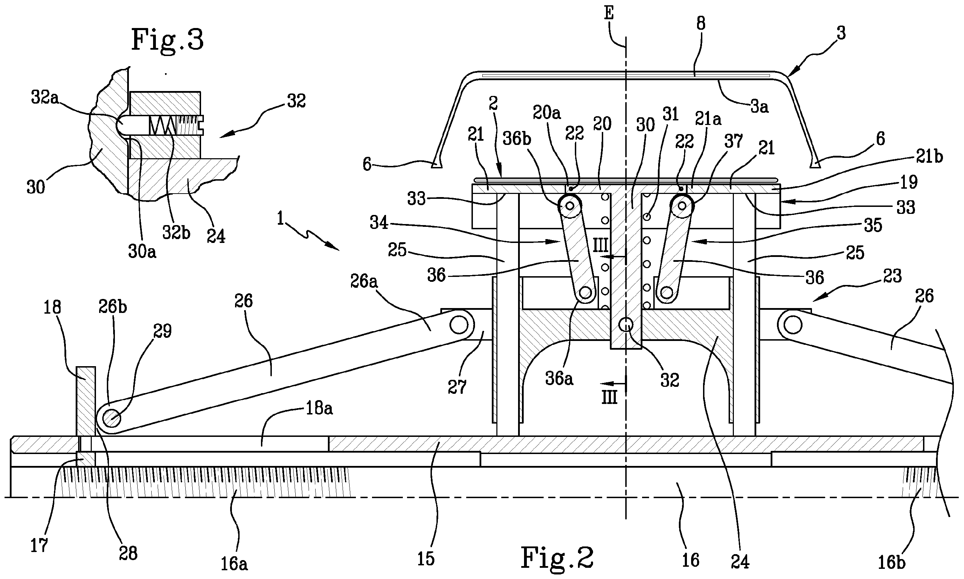

A process for applying the self-sealing sleeve or other semi-finished product 2 within the tyre 3, which can be carried out by means of the drum 1, provides that the drum itself is arranged in a radially contracted condition as in figures 1 and 2. In this condition, the first portions 20 of the sectors 19 are in the contracted position, with the pushers 24 approached to the central core 14 of the drum 1. The second portions 21 act in support against the alignment abutments 33 carried by the guide rods 25, remaining in the application condition.

In the radially contracted condition, the first portions 20 and the second portions 21 of the sectors 19 are mutually approached in a circumferential direction, so as to define a substantially continuous radially external surface 1a of the drum 1.

Since in the application condition the second portions 21 extend on the continuation of the first portions 20, the radially external surface 1a of the drum 1 in a contracted condition may have a substantially cylindrical conformation or, if required, suitably convex according to an arched transverse profile with preferably continuous pattern, substantially according to the shape of the radially internal surface 3a of the tyre 3 in which the semi-finished product 2 is to be applied.

The drum 1 in the contracted condition is adapted to receive the semi-finished product 2, the self-sealing sleeve in the example described, which is applied around the radially external surface 1a.

For this purpose, the self-sealing sleeve or other semi-finished product 2 may be made directly on the drum 1, for example by applying the annular sealing inserts 13, the protective film 12 and the self-sealing material layer 11 successively around the radially external surface 1a. Alternatively, the components of the semi-finished product 2 may be pre-assembled and then applied around the external surface of the drum 1.

The maximum external diameter Dmax of the drum 1 in said radially contracted condition, including the footprint of the semi-finished product 2, is smaller than a minimum internal diameter Dmin of the tyre 3, which can be identified at the anchoring portions 6.

The drum 1 bearing the semi-finished product 2 is therefore adapted to be inserted axially within the tyre 3, as in figure 2, preferably so as to arrange the semi-finished product 2 in a coaxial and axially centred position with respect to an equatorial plane E of the tyre 3 itself.

Then, a radial expansion of the drum 1 is started, so that the semi-finished product 2 is brought to adhere against the radially internal surface 3a of the tyre 3.

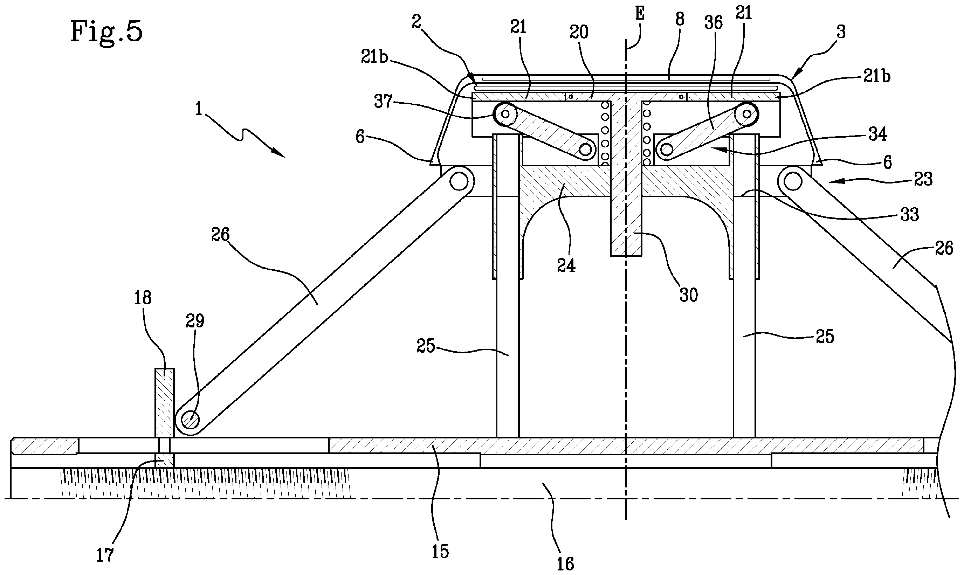

To this end, by means of an actuator not shown, the control screw 16 is actuated in rotation within the tubular shaft 15. The interaction between the primary driving devices 23 and the driven driving members 34 causes the radial expansion of the drum 1, and of the semi-finished product 2 arranged thereon, to take place with two successive movements, shown in figures 4 and 5, respectively.

A first movement is performed in an initial step in which the reciprocal approach of the sliders 18 causes, through the operating levers 26, a radial displacement of the pushers 24 along the respective guide rods 25. The first portions 20 of the sectors 19, pushed by the compression springs 31 and/or retained by the retention devices 32, move radially away from the geometric axis X of the drum 1 together with the pushers 24, imposing a concentrated radial expansion to the semi-finished product 2 in the areas surrounding the first portions 20. The semi-finished product 2 may oppose a certain elastic resistance to the expansion, which is however contrasted by the compression springs 31 and/or by the action of the retention devices 32. The first portions 20 therefore move integrally with the pushers 24, overcoming the elastic reaction exerted by the semi-finished product 2, until it comes into contact with the radially internal surface 3a of the tyre 3, along a first circumferential zone A located at the first portions 20 of the sectors 19.

During the execution of the first movement, the axially internal end edges 21a of the second portions 21, engaged by the constraint pins 22, follow the radial movement of the first portions 20 moving away from the geometric axis X. The axially external end edges 21b of the second portions 21, on the other hand, tend to remain against the alignment abutments 33 arranged at the ends of the guide rods 25, also due to the elastic reaction exerted by the semi-finished product 2 on the second portions 21.

Therefore, during the execution of the first movement, the second portions 21 move with an angular rotation movement around the constraint pins 22, from the application condition towards the pointing condition.

The pointing condition is reached when the first circumferential zone A of the semi-finished product 2 comes into contact against the tyre 3. As the reciprocal approach of the sliders 18 along the central core 14 progresses, the movement of the first portions 20 encounters the resistance exerted by the tyre 3. In this situation, the forces transmitted through the pushers 24 overcome the resistance exerted by the compression springs 31 and/or by the retention devices 32. The pins 32a then disengage from the respective engagement seats 30a and the pushers 24 continue their travel along the guide rods 25, sliding along the respective stems 30 and compressing the compression springs 31, so as to translate towards the first portions 20 of the sectors 19.

The sliding of the pushers 24 along the stems 30 causes the execution of the second movement, by means of which the second portions 21 of the sectors 19 move away from the geometric axis X of the drum 1.

In fact, with the approach of the pushers 24 to the respective sectors 19, the action exerted by the thrust arms 36 through the sliding rollers 37 imposes on the respective second portions 21 a new angular rotation about the axial end edges 20a of the respective first portions 20. The second portions 21 are therefore progressively brought back to the application condition while the sliding rollers 37 translate towards the axially external end edges semi-finished product 2 is elastically expanded until it comes into contact against the radially internal surface 3a of the tyre 3, also along second circumferential zones B, axially distant from the first circumferential zone A interposed therebetween. The semi-finished product 2 is thus applied against the radially internal surface 3a of the tyre 3 according to the entire circumferential and axial development of the radially external surface of the semi-finished product 2 itself.

The progressive angular rotation of the second portions 21 also brings the semi-finished product 2 to adhere against the radially internal surface 3a of the tyre 3 progressively towards the axially external edges of the semi-finished product 2, starting from the first portion 20 located near the equatorial plane E. This circumstance favours an effective expulsion of the air present between the semi-finished product 2 and the tyre 3, thus improving their mutual adhesion.

At the end of the application, with an actuation of the driving screw in the direction opposite to that used for the expansion of the drum 1, the contraction thereof is caused with an inverse cycle with respect to that described above. The radially external surface 1a of the drum 1 is separated from the semi-finished product 2, which adheres to the radially internal surface 3a of the tyre 3.

The drum 1 is then extracted from the tyre 3 carrying in association with its radially internal surface 3a the semi-finished product 2 and arranges itself to receive a subsequent semi-finished product 2 to start a new application cycle within a subsequent tyre 3.

## Claims

1. Drum (1) for the application of semi-finished products within tyres for vehicle wheels, comprising:
a central core (14) defining a geometric axis (X) of the drum (1);
a plurality of sectors (19) circumferentially distributed around said geometric axis (X), **characterised in that**
each of said sectors (19) comprises:
at least one first portion (20) radially movable with respect to the central core (14); and
two second portions (21) located in axially external positions and respectively opposite with respect to the first portion, each axially extending away from an axial end edge (20a) of the first portion (20) and radially movable with respect to the first portion (20); primary driving devices (23) operating between the central core (14) and the first portion (20) of each sector (19) in order to cause a radial translation of the first portions (20) away from the central core (14) from a contracted position towards an expanded position;
driven driving members (34) operatively connected with the primary driving devices (23) and the second portions (21) of the sectors (19), in order to move the second portions (21) away from the central core (14) after the attainment of the expanded position of the first portions (20) of the sectors (19).

2. Drum according to claim 1, wherein each of the second portions (21) is movable with respect to the first portion (20) between a pointing condition in which it is obliquely oriented towards the geometric axis (X) of the drum (1) and an application condition in which it is extended axially over the continuation of the first portion (20).

3. Drum according to one or more of the preceding claims, wherein the primary driving devices (23) comprise, for each sector (19), a pusher (24) slidably guided in radial direction with respect to the central core (14),

4. Drum according to one or more of the preceding claims, further comprising alignment abutments (33) carried by the central core (14) and acting against said second portions (21) when the first portions (20) of the sectors (19) are in the contracted position.

5. Drum according to claim 4, wherein when the first portions (20) are in contracted position, the alignment abutments (33) maintain the second portions (21) in axial alignment relation with the respective first portions (20).

6. Drum according to claim 4 or 5, wherein the second portions (21) are disengageable from the respective alignment abutments (33) in consequence of the movement of the first portions (20) towards the expanded position.

7. Drum according to one or more of the claims 3 to 6, also comprising elastic elements (31) operating between the pushers (24) and the first portions (20) of the sectors (19) for pushing the latter in radial movement away from the pushers (24).

8. Drum according to one or more of the claims 3 to 7, further comprising retention devices (32) for preventing radial movement of the first portions (20) with respect to the pushers (24), opposing centripetal thrusts radially transmitted to the first portions (20).

9. Drum according to claim 8, wherein said retention devices (32) are configured for selectively enabling the radial movement of the first portions (20) with respect to the pushers (24), when the centripetal radial thrusts exceed a predetermined value.

10. Drum according to one or more of the preceding claims, wherein said driven driving members (34) comprise pressure elements (35) operating against the second portions (21) in radially internal position with respect thereto.

11. Drum according to claim 10, wherein said pressure elements (35) comprise respective thrust arms (36), each extending between one of said pushers (24) and the respective second portion (21).

12. Drum according to claim 11, wherein each of said thrust arms (36) comprises a first end (36a) rotatably constrained to the respective pusher (24), and a second end (36b) acting against the respective second portion (21).

13. Process for the application of a semi-finished product (2) within a tyre (3) comprising:
arranging, in a radially contracted condition, a drum (1) having a radially external surface (1a) defined by sectors (19) circumferentially distributed around a geometric axis (X) and each comprising at least one first portion (20) and two second portions (21) that are each radially movable with respect to a first portion (20), wherein a maximum external diameter of the drum (1) in said radially contracted condition is smaller than a minimum internal diameter of said tyre (3);
applying said semi-finished product (2) around the radially external surface (1a) of the drum (1);
axially inserting, within the tyre (3), the drum (1) carrying the semi-finished product (2);
radially expanding the drum (1) in order to make the semi-finished product (2) adhere against a radially internal surface (3a) of the tyre (3);
wherein the action of radially expanding the drum (1) comprises:
a first movement in which the first portions (20) of the sectors (19) are radially moved away from the geometric axis (X) in order to bring the semi-finished product (2) in contact with said radially internal surface (3a) along a first circumferential zone (A) that is axially interposed between two second circumferential zones (B);
a second movement in which the second portions (21) of the sectors (19) are moved away from the geometric axis (X) in order to bring the semi-finished product (2) in contact with said radially internal surface (3a) along the second circumferential zones (B), axially distant from the first circumferential zone (A).

14. Process according to claim 13, wherein during the execution of the first movement the second portions (21) are brought from an application condition in which they axially extend on the continuation of the first portions (20), to a pointing condition in which they are obliquely oriented towards the geometric axis (X) of the drum (1).

15. Process according to claim 13 or 14, wherein during the second movement, the contact of the semi-finished product (2) against the radially internal surface (3a) is progressively actuated starting from the first circumferential zone (A) towards said at least one second circumferential zone (B).

## Patentansprüche

1. Trommel (1) für die Anbringung halbfertiger Produkte innerhalb von Reifen für Fahrzeugräder, umfassend:
einen zentralen Kern (14), der eine geometrische Achse (X) der Trommel (1) definiert;
eine Vielzahl von Sektoren (19), die in Umfangsrichtung um die geometrische Achse (X) herum verteilt sind, **dadurch gekennzeichnet, dass** jeder der Sektoren (19) umfasst:
zumindest einen ersten Abschnitt (20), der in Bezug auf den zentralen Kern (14) radial beweglich ist; und
zwei zweite Abschnitte (21), die sich in axial äußeren Positionen und jeweils entgegengesetzt in Bezug auf den ersten Abschnitt befinden, wobei sich jeder axial von einer axialen Endkante (20a) des ersten Abschnitts (20) weg erstreckt und in Bezug auf den ersten Abschnitt (20) radial beweglich ist;
primäre Antriebsvorrichtungen (23), die zwischen dem zentralen Kern (14) und dem ersten Abschnitt (20) eines jeden Sektors (19) arbeiten, um eine radiale Verschiebung der ersten Abschnitte (20) von dem zentralen Kern (14) weg aus einer kontrahierten Position in eine expandierte Position zu veranlassen; und
angetriebene Antriebselemente (34), die mit den primären Antriebsvorrichtungen (23) und den zweiten Abschnitten (21) der Sektoren (19) wirkverbunden sind, um die zweiten Abschnitte (21) von dem zentralen Kern (14) weg zu bewegen, nachdem die expandierte Position der ersten Abschnitte (20) der Sektoren (19) erreicht wurde.

2. Trommel nach Anspruch 1, wobei jeder der zweiten Abschnitte (21) in Bezug auf den ersten Abschnitt (20) zwischen einem hinweisenden Zustand, in welchem er schräg zu der geometrischen Achse (X) der Trommel (1) orientiert ist, und einem Anbringzustand, in welchem er sich axial über die Fortsetzung des ersten Abschnitts (20) erstreckt.

3. Trommel nach einem oder mehreren der vorhergehenden Ansprüche, wobei die primären Antriebsvorrichtungen (23) für jeden Sektor (19) einen Stößel (24) umfassen, der in radialer Richtung in Bezug auf den zentralen Kern (14) verschiebbar geführt wird.

4. Trommel nach einem oder mehreren der vorhergehenden Ansprüche, ferner umfassend Ausrichtungsanschläge (33), die durch den zentralen Kern (14) getragen werden und gegen die zweiten Abschnitte (21) wirken, wenn die ersten Abschnitte (20) der Sektoren (19) in der kontrahierten Position sind.

5. Trommel nach Anspruch 4, wobei, wenn die ersten Abschnitte (20) in der kontrahierten Position sind, die Ausrichtungsanschläge (33) die zweiten Abschnitte (21) in einer axial ausgerichteten Beziehung mit den jeweiligen ersten Abschnitten (20) halten.

6. Trommel nach Anspruch 4 oder 5, wobei die zweiten Abschnitte (21) als Folge der Bewegung der ersten Abschnitte (20) zu der expandierten Position hin aus den jeweiligen Ausrichtungsanschlägen (33) ausgerückt werden können.

7. Trommel nach einem oder mehreren der Ansprüche 3 bis 6, ebenfalls umfassend elastische Elemente (31), die zwischen den Stößeln (24) und den ersten Abschnitten (20) der Sektoren (19) arbeiten, indem sie letztere in radialer Bewegung von den Stößeln (24) wegdrücken.

8. Trommel nach einem oder mehreren der Ansprüche 3 bis 7, ferner umfassend Rückhaltevorrichtungen (32), um die radiale Bewegung der ersten Abschnitte (20) in Bezug auf die Stößel (24) zu verhindern, indem sie zentripetalen Schüben widerstehen, die auf die ersten Abschnitte (20) übertragen werden.

9. Trommel nach Anspruch 8, wobei die Rückhaltevorrichtungen (32) dazu ausgestaltet sind, selektiv die radiale Bewegung der ersten Abschnitte (20) in Bezug auf die Stößel (24) zu erlauben, wenn die zentripetalen radialen Schübe einen vorbestimmten Wert überschreiten.

10. Trommel nach einem oder mehreren der vorhergehenden Ansprüche, wobei die angetriebenen Antriebselemente (34) Druckelemente (35) umfassen, die gegen die zweiten Abschnitte (21) in einer radial inneren Position in Bezug auf diese arbeiten.

11. Trommel nach Anspruch 10, wobei die Druckelemente (35) jeweilige Schubarme (36) umfassen, die sich jeweils zwischen einem der Stößel (24) und dem jeweiligen zweiten Abschnitt (21) erstrecken.

12. Trommel nach Anspruch 11, wobei jeder der Schubarme (36) ein erstes Ende (36a) umfasst, das drehbar gegen den jeweiligen Stößel (24) gespannt ist, und ein zweites Ende (36b), das gegen den jeweiligen zweiten Abschnitt (21) wirkt.

13. Verfahren für die Anbringung eines halbfertigen Produkts (2) innerhalb eines Reifens (3), wobei das Verfahren umfasst:
Anordnen, in einem radial kontrahierten Zustand, einer Trommel (1) mit einer radial äußeren Oberfläche (1a), die durch Sektoren (19) definiert wird, die in Umfangsrichtung um eine geometrische Achse (X) verteilt sind, und jeweils zumindest einen ersten Abschnitt (20) und zwei zweite Abschnitte (21) umfassen, die jeweils in Bezug auf den ersten Abschnitt (20) radial beweglich sind, wobei ein maximaler äußerer Durchmesser der Trommel (1) in dem radial kontrahierten Zustand kleiner ist als ein minimaler Innendurchmesser des Reifens (3);
Anbringen des halbfertigen Produkts (2) um die radial äußere Oberfläche (1a) der Trommel (1) herum;
axiales Einsetzen der Trommel (1), die das halbfertige Produkt (2) trägt, innerhalb des Reifens (3);
radiales Expandieren der Trommel (1), um das halbfertige Produkt (2) gegen eine radial innere Oberfläche (3a) des Reifens (3) zur Haftung zu bringen;
wobei der Vorgang des radialen Expandierens der Trommel (1) umfasst:
eine erste Bewegung, in welcher die ersten Abschnitte (20) der Sektoren (19) radial von der geometrischen Achse (X) weg bewegt werden, um das halbfertige Produkt (2) entlang einer ersten umlaufenden Zone (A), die axial zwischen zwei zweiten umlaufenden Zonen (B) angeordnet ist, mit der radial inneren Oberfläche (3a) in Kontakt zu bringen;
eine zweite Bewegung, in welcher die zweiten Abschnitte (21) der Sektoren (19) von der geometrischen Achse (X) weg bewegt werden, um das halbfertige Produkt (2) entlang der zweiten umlaufenden Zonen (B) axial beabstandet von der ersten umlaufenden Zone (A) mit der radial inneren Oberfläche (3a) in Kontakt zu bringen.

14. Verfahren nach Anspruch 13, wobei während der Ausführung der ersten Bewegung die zweiten Abschnitte (21) von einem Anbringzustand, in welchem sie sich axial an der Fortsetzung der ersten Abschnitte (20) erstrecken, in einen hinweisenden Zustand gebracht werden, in welchem sie schräg zu der geometrischen Achse (X) der Trommel (1) orientiert sind.

15. Verfahren nach Anspruch 13 oder 14, wobei während der zweiten Bewegung der Kontakt des halbfertigen Produkts (2) gegen die radial innere Oberfläche (3a) progressiv hergestellt wird, beginnend von der ersten umlaufenden Zone (A) zu der zumindest einen zweiten umlaufenden Zone (B) hin.

## Revendications

1. Tambour (1) pour l'application de produits semi-finis dans des pneus pour roues de véhicule, comprenant :
un noyau central (14) définissant un axe géométrique (X) du tambour (1) ;
une pluralité de secteurs (19) répartis de manière circonférentielle autour dudit axe géométrique (X),
**caractérisé en ce que**
chacun desdits secteurs (19) comprend :
au moins une première partie (20) mobile radialement par rapport au noyau central (14) ; et
deux deuxièmes parties (21) situées dans des positions axialement externes et respectivement opposées par rapport à la première partie, chacune s'étendant axialement en s'éloignant d'un bord d'extrémité axiale (20a) de la première partie (20) et étant mobile radialement par rapport à la première partie (20) ; des dispositifs d'entraînement primaires (23) fonctionnant entre le noyau central (14) et la première partie (20) de chaque secteur (19) afin de provoquer une translation radiale des premières parties (20) loin du noyau central (14) d'une position contractée vers une position déployée ;
des éléments d'entraînement entraînés (34) reliés de manière fonctionnelle aux dispositifs d'entraînement primaires (23) et aux deuxièmes parties (21) des secteurs (19), afin d'éloigner les deuxièmes parties (21) du noyau central (14) après avoir atteint la position déployée des premières parties (20) des secteurs (19).

2. Tambour selon la revendication 1, dans lequel chacune des deuxièmes parties (21) est mobile par rapport à la première partie (20) entre un état de pointage dans lequel elle est orientée obliquement vers l'axe géométrique (X) du tambour (1) et un état d'application dans lequel elle s'étend axialement sur le prolongement de la première partie (20).

3. Tambour selon une ou plusieurs des revendications précédentes, dans lequel les dispositifs d'entraînement primaires (23) comprennent, pour chaque secteur (19), un poussoir (24) guidé en coulissement dans une direction radiale par rapport au noyau central (14).

4. Tambour selon une ou plusieurs des revendications précédentes, comprenant en outre des butées d'alignement (33) portées par le noyau central (14) et agissant contre lesdites deuxièmes parties (21) lorsque les premières parties (20) des secteurs (19) sont dans la position contractée.

5. Tambour selon la revendication 4, dans lequel, lorsque les premières parties (20) sont dans la position contractée, les butées d'alignement (33) maintiennent les deuxièmes parties (21) en relation d'alignement axial avec les premières parties respectives (20).

6. Tambour selon la revendication 4 ou 5, dans lequel les deuxièmes parties (21) peuvent se désengager des butées d'alignement respectives (33) en conséquence du mouvement des premières parties (20) vers la position déployée.

7. Tambour selon une ou plusieurs des revendications 3 à 6, comprenant également des éléments élastiques (31) fonctionnant entre les poussoirs (24) et les premières parties (20) des secteurs (19) pour pousser ces derniers dans un mouvement radial loin des poussoirs (24).

8. Tambour selon une ou plusieurs des revendications 3 à 7, comprenant en outre des dispositifs de retenue (32) pour empêcher le mouvement radial des premières parties (20) par rapport aux poussoirs (24), s'opposant à des poussées centripètes transmises radialement aux premières parties (20).

9. Tambour selon la revendication 8, dans lequel lesdits dispositifs de retenue (32) sont configurés pour permettre sélectivement le mouvement radial des premières parties (20) par rapport aux poussoirs (24), lorsque les poussées radiales centripètes dépassent une valeur prédéterminée.

10. Tambour selon une ou plusieurs des revendications précédentes, dans lequel lesdits éléments d'entraînement entraînés (34) comprennent des éléments de pression (35) fonctionnant contre les deuxièmes parties (21) dans une position radialement interne par rapport à celles-ci.

11. Tambour selon la revendication 10, dans lequel lesdits éléments de pression (35) comprennent des bras de poussée respectifs (36), s'étendant chacun entre l'un desdits poussoirs (24) et la deuxième partie respective (21) .

12. Tambour selon la revendication 11, dans lequel chacun desdits bras de poussée (36) comprend une première extrémité (36a) contrainte en rotation au poussoir respectif (24), et une deuxième extrémité (36b) agissant contre la deuxième partie respective (21).

13. Procédé pour l'application d'un produit semi-fini (2) dans un pneu (3) comprenant le fait :
d'agencer, dans un état radialement contracté, un tambour (1) ayant une surface radialement externe (la) définie par des secteurs (19) répartis de manière circonférentielle autour d'un axe géométrique (X) et comprenant chacun au moins une première partie (20) et deux deuxièmes parties (21) qui sont chacune mobiles radialement par rapport à une première partie (20), où un diamètre externe maximal du tambour (1) dans ledit état radialement contracté est inférieur à un diamètre interne minimal dudit pneu (3) ;
d'appliquer ledit produit semi-fini (2) autour de la surface radialement externe (la) du tambour (1) ;
d'insérer axialement, dans le pneu (3), le tambour (1) portant le produit semi-fini (2) ;
d'effectuer une expansion radiale du tambour (1) pour faire adhérer le produit semi-fini (2) contre une surface radialement interne (3a) du pneu (3) ;
dans lequel l'action d'expansion radiale du tambour (1) comprend :
un premier mouvement dans lequel les premières parties (20) des secteurs (19) sont éloignées radialement de l'axe géométrique (X) afin d'amener le produit semi-fini (2) en contact avec ladite surface radialement interne (3a) le long d'une première zone circonférentielle (A) qui est interposée axialement entre deux deuxièmes zones circonférentielles (B) ;
un deuxième mouvement dans lequel les deuxièmes parties (21) des secteurs (19) sont éloignées de l'axe géométrique (X) afin d'amener le produit semi-fini (2) en contact avec ladite surface radialement interne (3a) le long des deuxièmes zones circonférentielles (B), axialement distantes de la première zone circonférentielle (A).

14. Procédé selon la revendication 13, dans lequel, pendant l'exécution du premier mouvement, les deuxièmes parties (21) sont amenées d'un état d'application dans lequel elles s'étendent axialement sur le prolongement des premières parties (20), à un état de pointage dans lequel elles sont orientées obliquement vers l'axe géométrique (X) du tambour (1).

15. Procédé selon la revendication 13 ou 14, dans lequel, pendant le deuxième mouvement, le contact du produit semi-fini (2) contre la surface radialement interne (3a) est progressivement activé à partir de la première zone circonférentielle (A) vers ladite au moins une deuxième zone circonférentielle (B).
